# EUROPEAN PATENT APPLICATION

(11) **EP 2 421 261 A1**
(43) Date of publication of application: **22.02.2012**
(21) Application number: 10764273.8
(22) Date of filing: 15.04.2010
(51) Int. Cl.: H04N 7/173, H04N 5/765

(54) **ELECTRONIC NOTIFICATION DEVICE AND ELECTRONIC NOTIFICATION METHOD**

(30) Priority: 16.04.2009 EP 09158042
(71) Applicant: Panasonic Corporation, Kadoma-shi Osaka 571-8501 (JP)
(72) Inventor: REY, Jose Luis, 63225 Langen (DE); BECKER, Ralf, 63225 Langen (DE); SCHLOCKERMANN, Martin, 63225 Langen (DE); NAKANO, Toshihisa, Osaka-shi Osaka 540-6207 (JP); KAWAGUCHI, Toru, Osaka-shi Osaka 540-6207 (JP)
(74) Representative: Grünecker, Kinkeldey, Stockmair & Schwanhäusser
(86) International application number: PCT/JP2010/002727
(87) International publication number: WO 2010/119686

(57) **Abstract**

An electronic notification device (100) is provided which is capable of presenting, to a user, content which the user wishes to view, from a large number of pieces of content without the need for a large number of user operations. An electronic notification device (100) notifies a user whether content is available via a network, and includes a content availability checking unit (110) which obtains content availability information indicating one or more pieces of content available via the network; a specifying unit (120) which specifies one or more pieces of specific content in which a user's interest level is determined as having increased, by determining whether or not the user's interest level in the content has increased; and a notification unit (130) which notifies the user of specific content information indicating the one or more pieces of specific content specified by the specifying unit (120) among the one or more pieces of content indicated in the content availability information.

## Description

### [Technical Field]

The present invention relates to electronic notification devices and electronic notification methods which present audio and visual content to users.

### [Background Art]

Traditionally, there was a clear separation between content distributed by broadcast and content available over service networks, such as web content (Internet content). Broadcast content such as audio-visual content (known as TV or television content) is traditionally provided in a linear fashion utilizing broadcasting networks, for instance based on satellite, cable or terrestrial distribution systems (analog or digital).

More recently, with a rise in popularity of the Internet, audio-visual content has become increasingly available over the Internet. Internet-based audio-visual content is typically provided in a non-linear fashion via, for instance, streaming or download, utilizing communications networks. Preferably, broadband communications networks such as a digital subscribe line (DSL) are utilized, for instance.

Thus, each content type was provided using different distribution paths. Specifically, broadcast content by a broadcast infrastructure (broadcast networks), and web content via service networks such as the Internet, or parts thereof, or any other Internet Protocol (IP)-based network etc.

In recent times, both traditional broadcast and web-based distribution paths have become more and more converging. Traditional web content services are providing TV content, for example, content on YouTube (registered trademark). On the other hand, traditional broadcast content providers offer so-called catch-up TV services, for example, iPlayer of the British Broadcasting Corporation (BBC). The catch-up services are referred to also as catch-up TV services.

These catch-up services offer a non-linear access to broadcast TV content in the Internet. Typically, catch-up services provide free-of-charge access to archived content during a predetermined period of time, for example, all broadcast content of the last seven days. On the other hand, also pre-TV, i.e. future content (not-yet-broadcasted content), might be available, which is typically a charged service. Current catch-up services offer personal computer (PC)-based access to the broadcast content using a streaming and /or download distribution mechanism.

Initially, catch-up services were mainly accessed using a personal computer, which is typically equipped with a network interface, preferably a broadband interface allowing connection to the Internet. Recently, however, also consumer electronic (CE) devices are being equipped with broadband network interfaces.

For example, digital television sets (DTV) may have a broadcast interface capable of receiving broadcast programs over the air, such as digital video broadcasting-terrestrial (DVB-T), via satellite digital video broadcasting-satellite (DVB-S), via cable or via broadband network (IP-multicast), and at the same time may be provided with a bidirectional connection to the Internet, or, more generally speaking, any service network. Digital television sets are able to display audio/video web content, i.e. support typical widespread web codex sets, such as H.264 video, high-efficiency advance audio coding audio (HE-AAC audio), etc. Generally, the present invention is applied in the framework of such DTV equipment.

Another recent development in audio-visual consumer electronics are electronic program guides (EPG). Electronic program guides provide information with respect to scheduled broadcast television or radio programs. The information is typically displayed on the TV screen, with various navigation functions.

On the one hand, electronic program guides provide information that has been conventionally made available through program journals printed on paper, but also implies additional functions such as scheduling of content or future recording by a digital video recorder (DVR) or a personal video recorder (PVR). EPG on-screen information may be delivered by a dedicated channel or assembled by the receiving equipment from information sent by each program channel, for instance during the vertical blanking interval.

Typically, additionally delivered broadcast-related information includes information or metadata about broadcast content. The information may relate to the currently broadcasted content, or may even relate to content that is scheduled to be broadcast in the future. The electronic program guide is generated in receiving devices therefrom.

Currently, the EPG implemented in digital TV sets enables the user to mark (add signs to) programs of interest and the TV reminds the user of upcoming broadcast programs so that the user does not miss them. A typical way of accomplishing this is by showing a pop-up notification of an upcoming marked program while another broadcast channel is being watched. However, if the user is not currently watching TV, then this notification is missed.

A default procedure for watching missed programs is to record these programs on a Personal Video Recorder (PVR), such as a TiVO (trademark)-like product, and to watch them later. However, such a functionality cannot be implemented into a TV, since most digital TV sets do not have storage means.

Nevertheless, an additional possibility has emerged for watching missed programs on the web, via so-called catch-up services. The current trend on the broadcasters' side is to make TV programs available on their catch-up servers, via the Internet. This is becoming a widespread practice implemented by broadcasters across Europe, the US and in Japan. Many broadcasters offer content online for on-demand streaming and/or download. Moreover, not only catch-up services but also pre-broadcast programming services are available on the network (i.e., pre-TV content).

Such services are particularly popular if they are free-of-charge. However, not all programs are free. Usually only broadcasters' own productions are free, possible free access being further limited to country or region. An additional limitation of the free-of-charge access concerns a particular period of time during which viewing over the web is free-of-charge. Typically, web contents included in catch-up services are free-of-charge within the network for a predetermined period of time after the actual broadcasting of the program. Such a period of time is, for instance, between 5 and 20 days, or preferably, about 1 week (7 days). After the predetermined period of time has expired, for instance after 1 week (7 days), the web contents may remain available on the network on the catch-up service, but only at a charge. Generally, prices of programs offered by catch-up services will be changed time-by-time, such as day-by-day.

Pre-TV services, which are an example of the catch-up services, are generally available on the network at a charge.

As a technique for implementing such catch-up services as above, Patent Literature 1 discloses a technique of presenting, on the EPG, content downloadable by the catch-up services. Furthermore, Patent Literature 2 discloses a technique of downloading broadcast content which a user is currently viewing, or web content relating to recorded broadcast content, to present it to a user.

### [Citation List]

### [Patent Literature]

[PTL 1]
   U.S. Patent Application Publication No. 2009/0007198
[PTL 2]
   U.S. Patent Application Publication No. 2005/0050160

### [Summary of Invention]

### [Technical Problem]

However, the above conventional techniques involve a problem of a demand for a large number of user operations to have content which the user wishes to view, presented from among a large number of pieces of content.

For example, Patent Literature 1 discloses presenting, on the EPG, whether or not the content is downloadable on the catch-up services, but the presented content is not necessarily the content which a user wishes to view. Thus, a user needs to search the EPG for the content which the user wishes to view, resulting in requiring a cumbersome operation for a user.

Patent Literature 2 discloses downloading broadcast content which a user is currently viewing, or web content relating to recorded broadcast content, to present it to a user, but the web content relating to the broadcast content is not necessarily the content which a user wishes to view.

Thus, an object of the present invention is to provide an electronic notification device and an electronic notification method, which allow presentation, to a user, of content which the user wishes to view, from among a large number of pieces of content without the need for a large number of user operations.

### [Solution to Problem]

In order to solve the above problem, an electronic notification device according to an aspect of the present invention is an electronic notification device that notifies a user whether content is available via a network, the electronic notification device including: a content availability checking unit configured to obtain content availability information indicating one or more pieces of content available via the network; a specifying unit configured to specify one or more pieces of specific content in which a user's interest level is determined as having increased, by determining whether or not the user's interest level in the content has increased; and a notification unit configured to notify the user of specific content information indicating the one or more pieces of specific content specified by the specifying unit among the one or more pieces of content indicated in the content availability information.

With this, whether or not a user's interest level in content has increased is determined, and among a large number of available pieces of content, the content in which the user's interest level has increased is notified to a user, with the result that among the large number of available pieces of content, the content which a user wishes to view can be presented to the user without the need for a large number of user operations.

Furthermore, the specifying unit may further include: a designation accepting unit configured to accept an instruction by which the user designates the content; and a content specifying unit configured to specify, as the specific content, the content designated based on the instruction accepted by the designation accepting unit.

This allows a user to designate content in advance, with the result that content in which the user's interest level is higher can be presented to a user.

Furthermore, the designation accepting unit may be configured to accept the instruction via an electronic program guide (EPG) showing the content to be broadcast according to a predetermined schedule.

This allows a user to designate the content while looking at the electronic program guides (EPG), with the result that the content can be easily designated.

Furthermore, the specifying unit may further include a viewing determining unit configured to determine whether or not the content designated based on the instruction accepted by the designation accepting unit has already been viewed by the user, and the content specifying unit may be configured to specify, as the specific content, content determined by the viewing determining unit as not having been viewed, among the content designated based on the instruction accepted by the designation accepting unit.

With this, the content which has been designated by a user in advance but not been viewed, that is, the content which a user wishes to view but missed to watch, can be presented to the user.

Furthermore, the content availability checking unit is configured to obtain the content availability information indicating the one or more pieces of specific content available via the network and specified by the specifying unit.

With this, it is sufficient that only information indicating an available piece of specific content is obtained, that is, it is sufficient that whether or not only the content in which the user's interest level is high is available is determined, with the result that the processing load and the communication load can be reduced.

Furthermore, the electronic notification device may further include a history information storage unit configured to hold history information indicating a view history of the content by the user, and the specifying unit may be configured to specify the specific content based on the history information held in the history information storage unit.

With this, the history information reflects the user's inclination about watching programs, so that the content in which the user's interest level is high can be specified.

Furthermore, the electronic notification device may further include a user information accepting unit configured to accept user information indicating a taste or a preference of the user, and the specifying unit may be configured to specify the specific content based on the user information accepted by the user information accepting unit.

With this, only pre-registering simple information such as user's tastes and preferences makes it possible to easily specify content in which the user's interest level is high.

Furthermore, the electronic notification device may further include a period calculating unit configured to calculate a period during which the user's interest level in the specific content is high, and the notification unit may be configured to notify the user of period information indicating the period calculated by the period calculating unit, together with the specific content information.

With this, not only the specific content information but also the period during which the user's interest level in the specific content is high are presented to a user, so that the user is not required to perform cumbersome operations but only views the presented information and thereby can easily determine when to use the content.

Furthermore, for the specific content, a viewing fee to be charged to the user who views the specific content may be predetermined, and the period calculating unit may be configured to calculate, as the period, a low-price period during which the viewing fee is free or lower than a predetermined price.

With this, a free-of-charge or low-price period is presented to a user, so that a user can easily determine when to use the content, to be charged less.

Furthermore, the period calculating unit may be configured to calculate the low-price period based on current time information indicating a current time and a period rule indicating a relationship between the viewing fee and the period.

With this, the low-price period is calculated based on the current time and the period rule which is, for example, transmitted from a broadcaster or the like, so that an accurate low-price period can be presented to a user.

Furthermore, the period calculating unit may be configured to calculate the period rule and calculate the low-price period based on the calculated period rule and the current time information.

With this, the period rule itself is calculated, so that even in the case where the period rule cannot be obtained from a broadcaster or the like, the low-price period can be calculated based on the calculated period rule and thus be presented to a user.

Furthermore, the period calculating unit may be configured to calculate the low-price period based on current time information indicating a current time and an availability delay indicating a duration until the specific content is available on the network.

With this, the low-price period is calculated based on the current time and the delay which is a duration until the content is available, so that an accurate low-price period can be presented to a user.

Furthermore, the period calculating unit may be configured to calculate the availability delay and calculate the low-price period based on the calculated availability delay and the current time information.

With this, the availability delay itself is calculated, so that even in the case where the availability delay cannot be obtained from a broadcaster or the like, the low-price period can be calculated based on the calculated availability delay and thus be presented to a user.

Furthermore, for the content, a viewing fee to be charged to the user who views the content may be predetermined, and the specifying unit may be configured to specify, as the specific content, content of which viewing fee has been changed to free or a price lower than a predetermined price.

With this, the content in which the user's interest level has increased because of a reduction in price can be presented to a user.

Furthermore, the specifying unit may be configured to specify, as the specific content, content with details updated.

With this, the content in which the user's interest level has increased because of updated details can be presented to a user. For example, content which contains a normal edition plus a special edition (such as a making-of featurette) can be presented to a user.

Furthermore, the specifying unit may include: a viewing determining unit configured to determine whether or not the one or more pieces of content indicated in the content availability information have already been viewed by the user; and a content specifying unit configured to specify, as the specific content, content determined by the viewing determining unit as not having been viewed.

With this, the content in which the user's interest level has increased because the content has not been viewed can be presented to a user.

Furthermore, the electronic notification device may further include a request accepting unit configured to accept, from the user, a notification request for requesting notification of the specific content information, and the notification unit may be configured to notify the user of the specific content information when the request accepting unit accepts the notification request.

This enables notification with a user's desired timing of notification.

It is to be noted that the present invention can be implemented not only as an electronic notification device, but also as a method which includes, as steps, the processing units included in the electronic notification device.

Specifically, the electronic notification method according to an aspect of the present invention is an electronic notification method of notifying a user whether content is available via a network, the electronic notification method including: obtaining content availability information indicating one or more pieces of content available via the network; specifying one or more pieces of specific content in which a user's interest level is determined as having increased, by determining whether or not the user's interest level in the content has increased; and notifying the user of specific content information indicating the one or more pieces of content specified in the determining among the one or more pieces of content indicated in the content availability information.

Furthermore, in the notifying, the user may be notified of the specific content information and information related to the user's interest level in the specific content indicated in the specific content information when the user's interest level has increased or when a request for notification from the user is accepted.

Furthermore, the present invention may be implemented as a program which causes a computer to execute these steps. Moreover, the present invention may be implemented as a computer-readable recording medium, such as a compact disc-read only memory (CD-ROM), which has the program recorded thereon, and may also be implemented as information, data, or signals which represent the program. These program, information, data, and signals may be distributed via a communication network such as the Internet.

Part or all of the constituents included in the above electronic notification device may be provided in one system LSI (large scale integration). The system LSI is a super multifunctional LSI manufactured by integrating plural constituents into one chip and is specifically a computer system which includes a microprocessor, a ROM, and a RAM.

### [Advantageous Effects of Invention]

With the electronic notification device and the electronic notification method according to an aspect of the present invention, it is possible to selectively present to a user the content which the user wishes to view among a large number of pieces of content.

### [Brief Description of Drawings]

[Fig. 1]

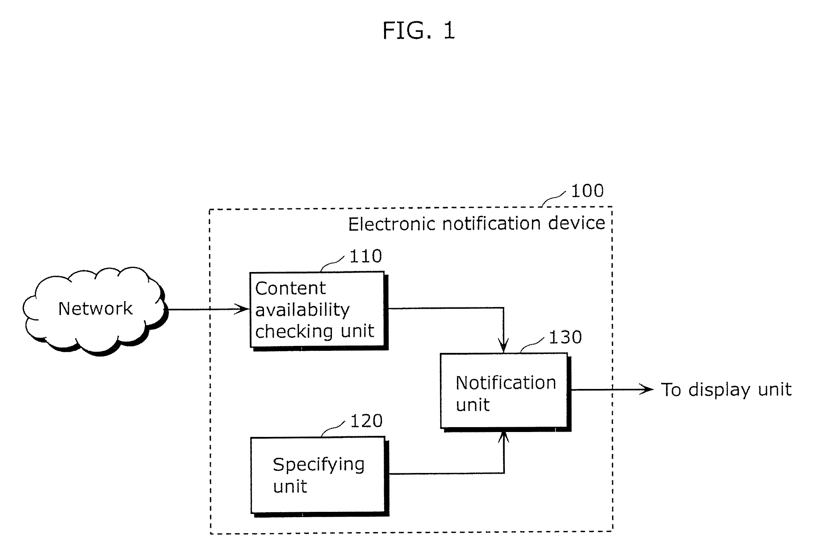

   FIG. 1 is a block diagram showing an example of a structure of an electronic notification device according to an embodiment of the present invention.
[Fig. 2]

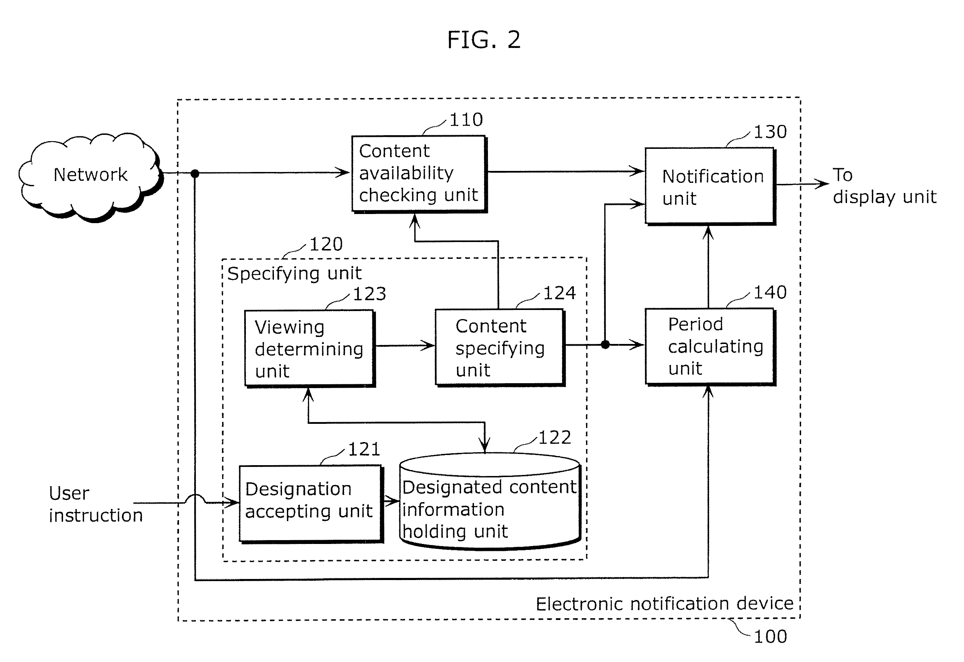

   FIG. 2 is a block diagram showing a specific example of the structure of the electronic notification device according to an embodiment of the present invention.
[Fig. 3A]

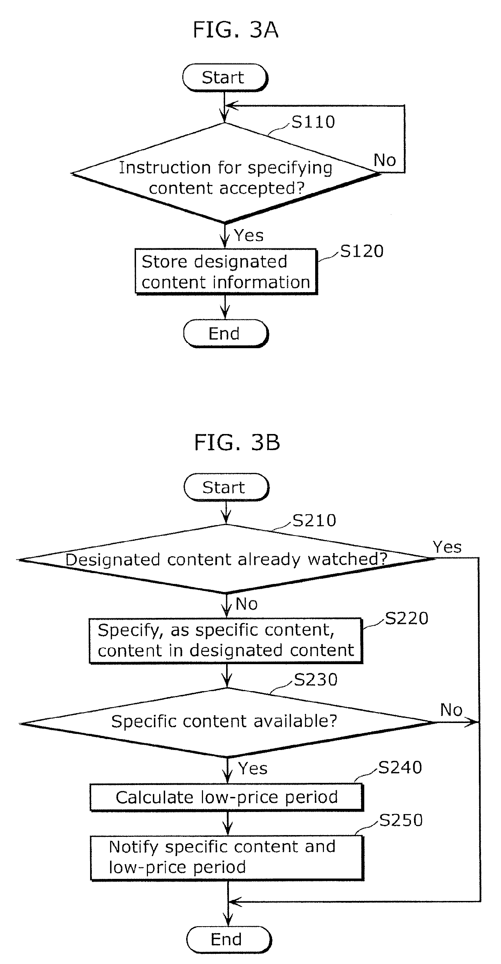

   FIG. 3A is a flowchart showing an exemplary operation of accepting content designation from a user among operations of the electronic notification device according to an embodiment of the present invention.
[Fig. 3B]
   FIG. 3B is a flowchart showing an exemplary operation of notifying specific content information among the operations of the electronic notification device according to an embodiment of the present invention.
[Fig. 4]

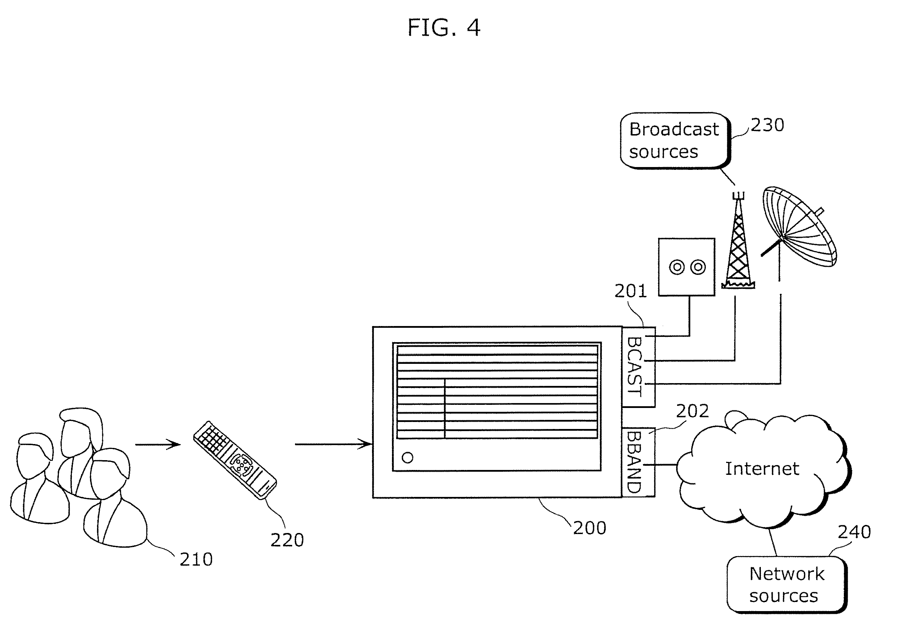

   FIG. 4 illustrates an example of a system in which the electronic notification device according to an embodiment of the present invention is applied.
[Fig. 5]

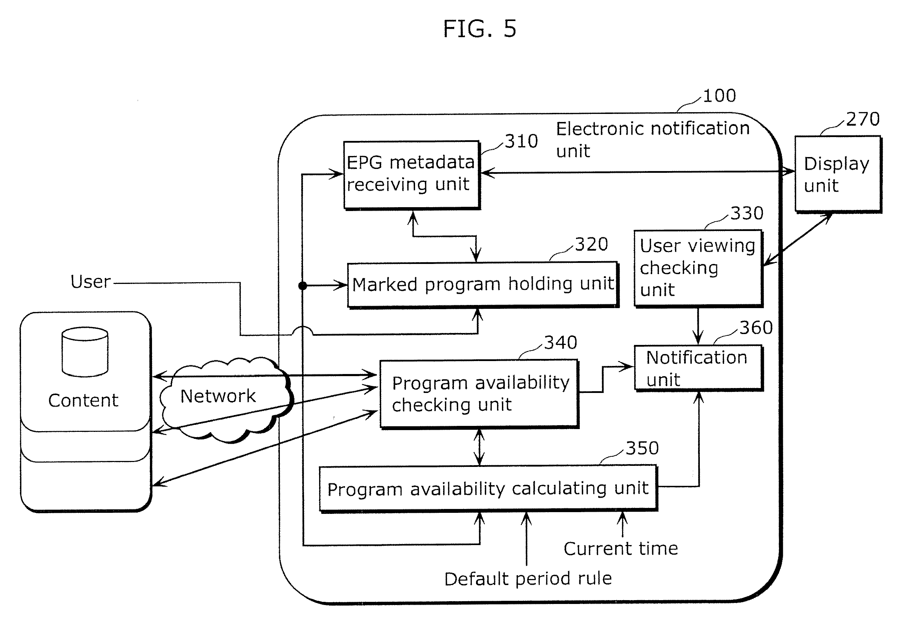

   FIG. 5 is a block diagram showing an overview over the functional components of the electronic notification device according to an embodiment of the present invention.
[Fig. 6]

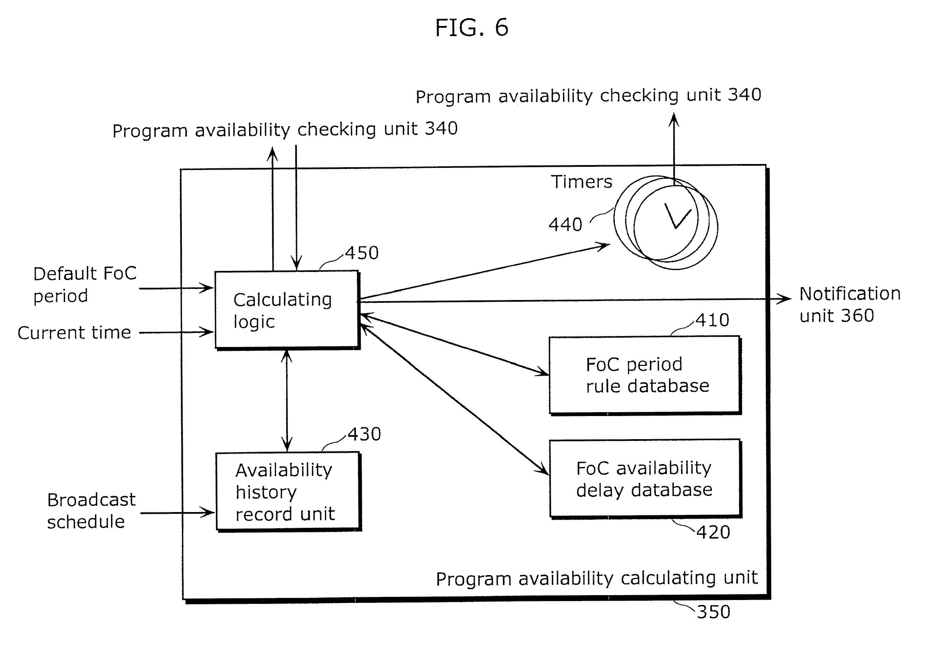

   FIG. 6 is a block diagram showing an example of a structure of a program availability calculating unit according to an embodiment of the present invention.
[Fig. 7A]

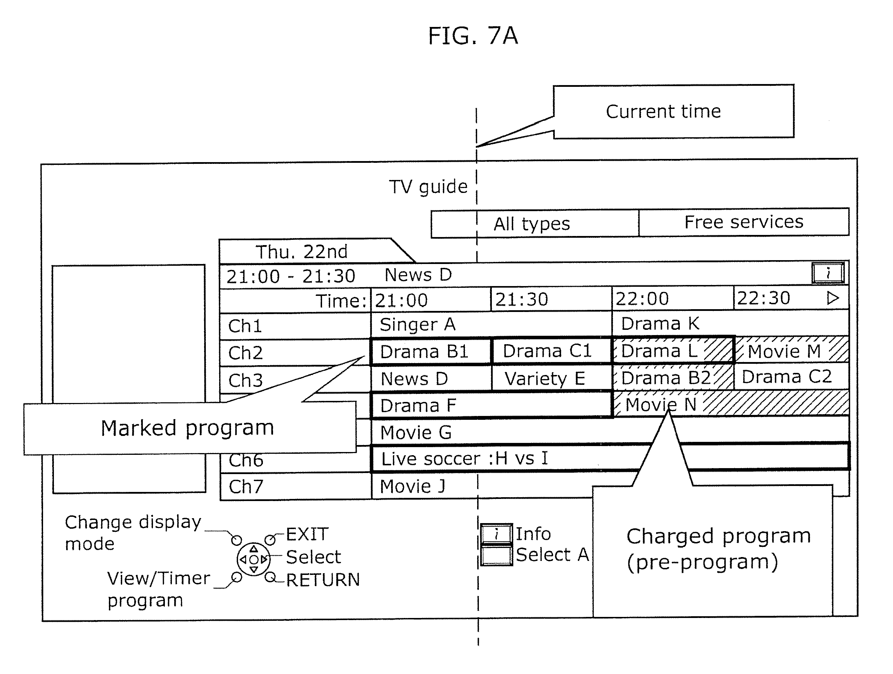

   FIG. 7A illustrates a screen example of an electronic program guide in a status when a program is marked.
[Fig. 7B]

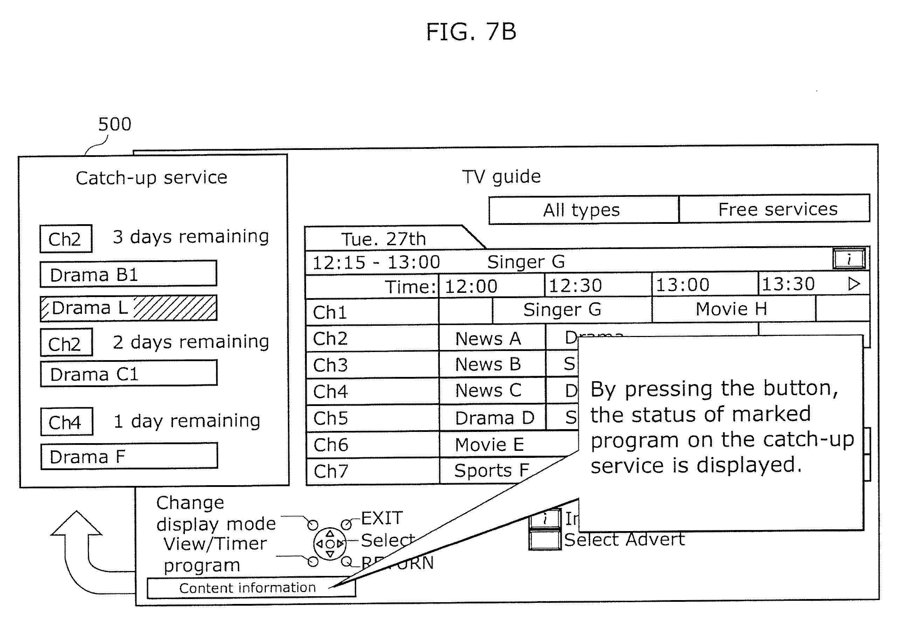

   FIG. 7B illustrates a screen example of an electronic program guide in a status when notification of availability of online content is performed.
[Fig. 8]

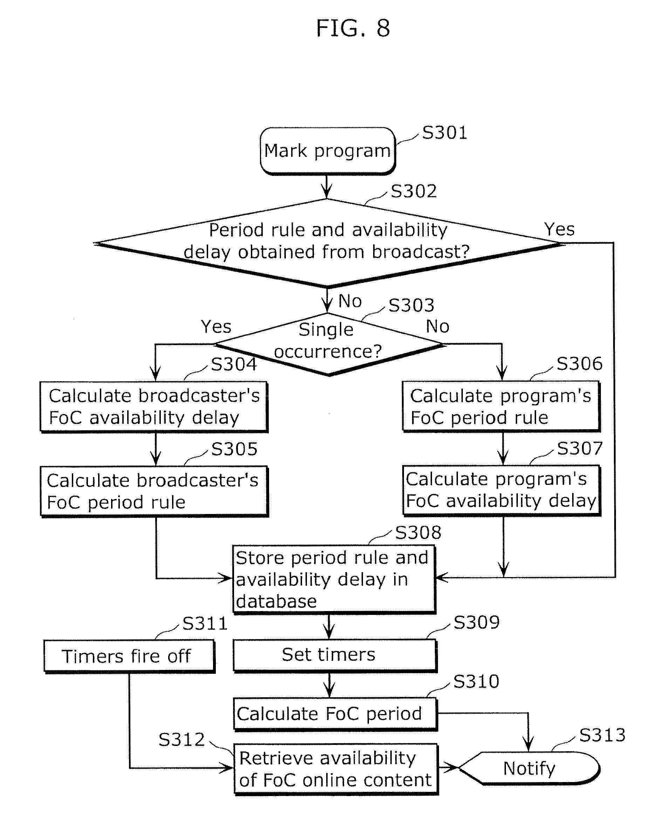

   FIG. 8 is a flowchart showing an exemplary operation in a process of calculating a free-of-charge period among the operations of the electronic notification device according to an embodiment of the present invention.
[Fig. 9]

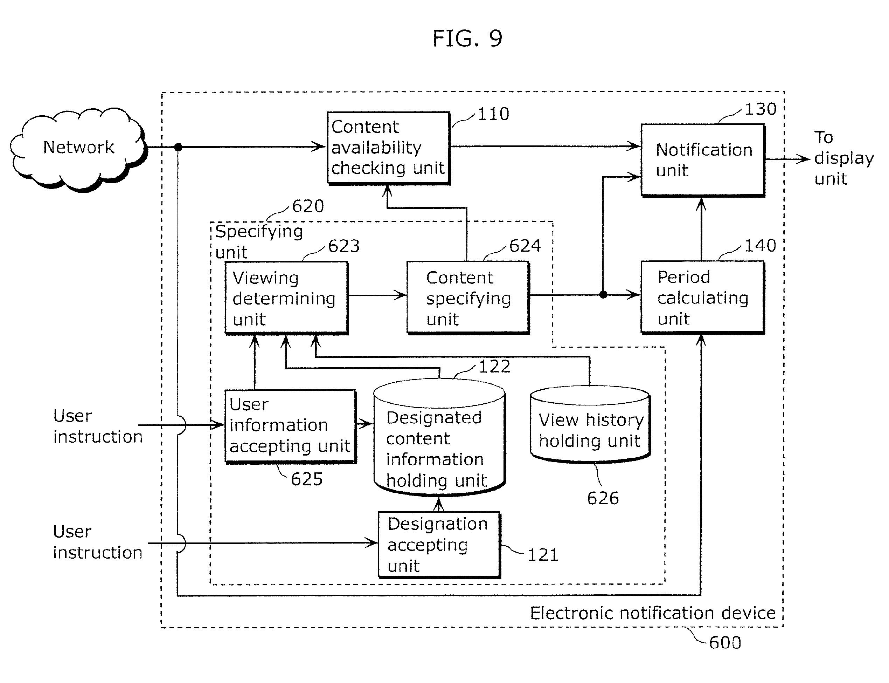

   FIG. 9 is a block diagram showing an example of a structure of an electronic notification device according to a variation of the present invention.

### [Description of Embodiments]

With reference to the drawings, the following describes an embodiment of an electronic notification device and an electronic notification method according to the present invention.

The electronic notification device according to the embodiment of the present invention includes: a content availability checking unit configured to obtain content availability information indicating one or more pieces of content available via a network; a specifying unit configured to specify one or more pieces of specific content in which a user's interest level is determined as having increased, by determining whether or not the user's interest level in the content has increased; and a notification unit configured to notify the user of specific content information indicating the one or more pieces of specific content specified by the specifying unit among the one or more pieces of content indicated in the content availability information.

FIG. 1 is a block diagram showing an example of a structure of an electronic notification device 100 according to the embodiment of the present invention. The electronic notification device 100 is an electronic notification device which notifies a user whether or not content is available via a network. The content is web content distributed via a network such as the Internet, and is, for example, web content which is the same as or related to broadcast content received from a terrestrial or satellite broadcast.

As shown in FIG. 1, the electronic notification device 100 includes a content availability checking unit 110, a specifying unit 120, and a notification unit 130. The electronic notification device 100 is connected to a network, and obtains information or the like on content from a server or the like via the network.

The content availability checking unit 110 obtains content availability information indicating one or more pieces of content available via the network. For example, the content availability checking unit 110 obtains, as content availability information, information indicating all pieces of available content from one or more servers connected to the content availability checking unit 110 via the network. Alternatively, the content availability checking unit 110 obtains, as the content availability information, information indicating content which is available via the network and is specified by the specifying unit 120.

The specifying unit 120 determines whether or not a user's interest level in content has increased, to specify one or more pieces of specific content in which the user's interest level has increased. The user's interest level in content depends on the value of content. For example, the value of content is determined according to at least one of a fee for viewing content, content details, and image and sound quality of content.

Furthermore, the user's interest level in content and the value of content depend also on whether the content has been viewed, user's tastes and preferences, or the like factors. As such, the user's interest level in content and the value of content change over time or change when a predetermined event occurs. The specifying unit 120 specifies, as specific content, content with a temporal change in the value.

The notification unit 130 notifies a user of specific content information indicating the one or more pieces of specific content specified by the specifying unit 120 among the one or more pieces of content indicated in the content availability information.

With the above structure, the electronic notification device 100 according to the embodiment of the present invention specifies the specific content in which the user's interest level has increased among the one or more pieces of content, and notifies a user of the specific content information indicating the specific content available via the network. In short, the electronic notification device 100 according to the embodiment of the present invention presents, to a user, information indicating the specific content which is available and the user wishes to view. This allows presentation, to a user, of the content which the user wishes to view among a large number of pieces of content without the need for a large number of user operations.

A more preferable structure of the electronic notification device 100 according to the embodiment of the present invention is described with reference to FIG. 2. FIG. 2 is a block diagram showing a specific example of a structure of the electronic notification device 100 according to the embodiment of the present invention.

As shown in FIG. 2, the electronic notification device 100 includes the content availability checking unit 110, the specifying unit 120, the notification unit 130, and a period calculating unit 140.

As described with reference to FIG. 1, the content availability checking unit 110 obtains the content availability information indicating the one or more pieces of specific content specified by the specifying unit 120 among the one or more pieces of content available via the network. Specifically, the content availability checking unit 110 communicates with a server via the network to determine whether or not the one or more pieces of specific content specified by the specifying unit 120 is available at the present or in the future, and obtains, as the content availability information, information indicating one or more pieces of specific content among all the available pieces of content.

As described with reference to FIG. 1, the specifying unit 120 determines whether or not the user's interest level in content has increased, to specify the one or more pieces of specific content in which the user's interest level has increased. In an example shown in FIG. 2, when content is designated by a user, the specifying unit 120 determines that the user's interest level in the content has increased. Furthermore, when a user views content, the specifying unit 120 determines that the user's interest level in the content has increased.

As shown in FIG. 2, the specifying unit 120 includes a designation accepting unit 121, a designated content information holding unit 122, a viewing determining unit 123, and a content specifying unit 124.

The designation accepting unit 121 is an interface which accepts a content designation instruction by which a user designates content. For example, the designation accepting unit 121 accepts the content designation instruction from a user via an electronic program guide (EPG) listing content which is to be broadcasted according to a predetermined schedule. The electronic program guide is displayed on a display (not shown in FIG. 2).

The designated content information holding unit 122 is a storage unit, such as a memory, which holds designated content information indicating designated content that is content which the content designation instruction accepted by the designation accepting unit 121 indicates. For example, the designated content information holding unit 122 stores an identifier indicating the designated content, in association with a date and time at which the content designation instruction is accepted.

The viewing determining unit 123 determines whether or not the designated content has already been viewed by a user.

The content specifying unit 124 specifies, as specific content, content determined by the viewing determining unit 123 as not having been viewed by a user, among the content designated based on the instruction accepted by the designation accepting unit 121. In other words, the specific content is content which has been designated by a user in advance but missed to watch, that is, content in which the user's interest level is determined as having increased.

As described with reference to FIG. 1, the notification unit 130 notifies a user of specific content information indicating the one or more pieces of specific content specified by the specifying unit 120 among the one or more pieces of content indicated in the content availability information. Furthermore, the notification unit 130 notifies of period information indicating a period calculated by the period calculating unit 140, together with the specific content information.

For example, the notification unit 130 performs the notification by generating an image indicating the specific content information and the period information and then displaying the generated image on the display. Alternatively, the notification unit 130 may perform the notification by generating audio data indicating the specific content information and the period information and then outputting the generated audio data as audible signals from a speaker or the like.

The period calculating unit 140 calculates a period during which the user's interest level in the specific content is high. For example, for each piece of content, a viewing fee to be charged to a user who views the content is predetermined, and the period calculating unit 140 calculates a low-price period during which the viewing fee is free or lower than a predetermined price. In the following description, of the low-price period, a period during which the viewing fee is free is referred to as a free-of-charge period.

Specifically, the period calculating unit 140 calculates the low-price period based on current time information indicating the current time and a period rule indicating a relationship between the viewing fee and the period. Alternatively, the period calculating unit 140 may calculate the low-price period based on the current time information and an availability delay indicating a duration until the content is available on the network. Furthermore, the period calculating unit 140 may calculate the period rule and the availability delay to calculate the low-price period based on the calculated period rule or availability delay. More specific operations and structure of the period calculating unit 140 are described later.

With the above structure, the electronic notification device 100 according to the embodiment of the present invention specifies, as the specific content, content missed to watched among the content designated in advance by a user, and notifies a user of the specific content information indicating the specific content among the content available via the network. This allows presentation, to a user, of the content which the user wishes to view among a large number of pieces of content without the need for a large number of user operations.

The specifying unit 120 is not required to include the viewing determining unit 123. In this case, the content specifying unit 124 specifies, as the specific content, content indicated in the content designation instruction accepted by the designation accepting unit 121. Specifically, the content specifying unit 124 specifies, as the specific content, content indicated in the designated content information held in the designated content information holding unit 122. That is, the specific content is content which a user wishes to view and has designated in advance and in which the user's interest level has increased by the designation.

Furthermore, the specifying unit 120 is not required to include the designation accepting unit 121 or the designated content information holding unit 122. In this case, the viewing determining unit 123 determines whether or not the content has been viewed by a user, and the content specifying unit 124 specifies, as the specific content, the content determined as not having been viewed. Alternatively, it is also possible that the content availability checking unit 110 obtains, as the content availability information, information indicating all pieces of available content, and the viewing determining unit 123 determines whether or not one or more pieces of content indicated in the content availability information have already been viewed by a user.

In either case, specified as the specific content is content which is available and has not been viewed by a user yet. That is, the specific content is content which a user has not viewed yet and therefore the user's interest level has increased in.

The notification unit 130 may include a request accepting unit which accepts, from a user, a notification request for requesting notification of the specific content information. It is then possible that when the request accepting unit accepts the notification request, the notification unit 130 notifies a user of the specific content information. This enables notification with a user's desired timing of notification.

Next, an operation of the electronic notification device 100 according to the embodiment of the present invention is described. First, an operation of accepting content designation from a user is described with reference to FIG. 3A. FIG. 3A is a flowchart showing an exemplary operation of accepting the content designation from a user among operations of the electronic notification device 100 according to the embodiment of the present invention.

The designation accepting unit 121 determines whether or not a content designation instruction by which content is designated has been accepted (S110). When the content designation instruction has been accepted (Yes in S110), the designation accepting unit 121 stores the content information indicating the designated content into the designated content information holding unit 122 (S120).

As described above, the electronic notification device 100 according to the embodiment of the present invention accumulates the designated content information in the designated content information holding unit 122 when the content designation instruction has been accepted.

Next, an operation of notifying the specific content information is described with reference to FIG. 3B. FIG. 3B is a flowchart showing an exemplary operation of notifying the specific content information among the operations of the electronic notification device 100 according to the embodiment of the present invention.

The viewing determining unit 123 determines whether or not the designated content indicated in the designated content information held in the designated content information holding unit 122 has already been viewed by a user (S210). When all pieces of the designated content have already been viewed (Yes in S210), the notification process ends. This means that the notification unit 130 notifies nothing. Alternatively, the notification unit 130 notifies a user that among the content which the user would be interested in, there is no available content.

When there is designated content which has not been viewed (No in S210), the content specifying unit 124 specifies, as the specific content, the designated content which has not been viewed (S220). Next, the content availability checking unit 110 determines whether or not the content specified by the content specifying unit 124 is available on the network (S230).

When all pieces of the specific content are not available (No in S230), the notification process ends. This means that the notification unit 130 notifies nothing. Alternatively, the notification unit 130 notifies a user that there are not available specific content.

When there is available specific content (Yes in S230), specifically, when the content availability checking unit 110 obtains the content availability information, the period calculating unit 140 calculates a low-price period as a period during which the user's interest level in the content is high (S240). The period calculating unit 140 may calculate, instead of the low-price period, a period during which image and sound quality of the content is high or a period during which the content additionally contains special material, for example.

At the end, the notification unit 130 notifies a user of specific content information indicating the specific content and period information indicating the low-price period (S250).

As described above, the electronic notification device 100 according to the embodiment of the present invention presents, to a user, the available specific content and the period during which the specific content is offered at a low price. This allows presentation, to a user, of the content which the user wishes to view among a large number of pieces of content without the need for a large number of user operations. For example, a user only needs to view the presented information to know the specific content and its low-price period.

Subsequently, a more specific example of the electronic notification device 100 according to the embodiment of the present invention is described.

Conventionally, products enabling both program consumption from broadcast and from service networks, make a clear separation between what is available on the web and what is available from broadcast TV. For example, if a user misses an episode of a particular series, then the user has to remember which episode number, on which date, and on which channel, and has to input this information into the Internet browser of the TV set, pointing at the broadcaster's web servers via the remote control, and then start the web video player of the TV set to check availability of a lost episode and, if possible, retrieve the audio/visual content relating to the missed program. However, the required operations for a user are rather complicated.

More recent developments show that it is possible to integrate web content into electronic program guides. However, even for EPGs, integrating web content (broadband content), the drawback remains that if a user missed watching a marked program, the user has to search for that program on the catch-up service manually, by navigating through the menus of the EPG. Furthermore, since the price of the program or the condition of availability free-of-charge may be changed day-by-day, watching conditions must be checked manually. User operation therefore remains complicated.

In view of the conventional problems as above, a preferred embodiment of the present invention can provide an electronic notification device and an electronic notification method for implementing an improved electronic program guide, providing a user with easy access to information related to desired contents from network based catch-up services.

The present invention provides a particularly easily operable and user-friendly interface by integrating a function of reminding a user of marked programs that have been missed into an electronic program guide. The system including the electronic notification device according to an implementation of the present invention checks whether the user has watched marked content (e.g., broadcast programs), and notifies the user when missed broadcast programs are available online, and for how long they will remain online.

The content is, for example, a program broadcast over airwaves (which program is referred to also as a broadcast program). The same program as the broadcast program or a related program which relates to the broadcast program becomes available as web content on the network.

Preferably, the system including the electronic notification device according to an implementation of the present invention further informs the user when programs are available free-of-charge, and preferably for how long they will remain free-of-charge. Typically, free-of-charge access to content is limited to a certain time window (for instance seven days after broadcast), and the content remains available with charges for a later period. A few button presses on the EPG screen allow the user to view the free-of-charge web content according to his/her interest.

The respective functionality is integrated in the electronic program guide (EPG) that the user currently uses for browsing, checking broadcast program schedules and making markings of favorite programs, thus rendering it unnecessary for the user to have a PC or to have knowledge about the web portal offerings and the particular rules of availability of each broadcaster.

The solution according to the present invention is advantageous over a traditional PVR in the sense that it also enables the watching of programs that have overlapping broadcast schedules and it does not require the TV to have storage means, since after broadcast streaming access via a broadband network interface may be made available.

FIG. 4 illustrates an example of a system in which the electronic notification device 100 according to the embodiment of the present invention is applied. The electronic notification device 100 according to the embodiment of the present invention is, for example, included in a digital television set 200.

A user 210 interacts with the digital television set 200, typically through a remote control unit 220, and browses the EPG (schematically illustrated as displayed on the screen of the digital TV set 200) to select the content that may be received from different sources (a broadcast source 230 and a network source 240). The sources are, for instance, the broadcast sources 230 such as cable TV, digital terrestrial TV or satellite TV, or the network sources 240, available via the Internet or even a proxy server located at the Internet service provider's network, or any kind of network, preferably broadband.

Access from the digital TV set 200 to the broadcast sources 230 and the broadband network sources 240 is provided via respective interfaces 201 and 202.

It is further noted that it is not compulsory to have the broadcast source 230 if the broadcast programs are re-sent via broadband network services (IP multicast), which is the case in telecommunication provider's IPTV deployments. Moreover, it is noted that the components of the electronic notification device 100 according to the embodiment of the present invention, that will be described in more detail below with reference to FIG. 5, may be integrated in digital TV set 200 but may equally also be provided in other consumer electronic devices, such as DVD recorders, personal video recorders, or set-top boxes.

FIG. 5 is a block diagram showing an overview over the functional components of the electronic notification device 100 according to the embodiment of the present invention.

As shown in FIG. 5, the electronic notification device includes an EPG metadata receiving unit 310, a marked program holding unit 320, a user viewing checking unit 330, a program availability checking unit 340, a program availability calculating unit 350, and notification unit 360. The functionality of each of the above processing units will be described in more detail below.

The EPG metadata receiving unit 310 functions to receive, store and share with other processing units information indicating the broadcast program schedule received from the broadcaster. The information indicating the broadcast program schedule is typically contained in service information streams (SI) such as those in accordance with the standard DVB-SI. SI streams are embedded in the broadcast audio/video stream, and they cover a variable time interval, typically the next seven days. SI streams are also typically embedded in the re-transmission of broadcast programs over IP multicast protocol as used in IPTV systems operated from telecommunications providers, such as Deutsche Telekom.

Additionally, and since some broadcasters do not send SI streams, the broadcast program schedules may be retrieved, either in their entirety or partially, from other sources such as GuidePlus+. GuidePlus+ is an electronic program guide that is available in European countries, wherein EPG service data are downloaded automatically at particular periods of time, such as overnight.

The EPG metadata receiving unit 310 corresponds to, for example, part of functions of the specifying unit 120 shown in FIG. 2. This means that the specifying unit 120 receives the electronic program guide via a network or airwaves.

After acquisition, by the EPG metadata receiving unit 310, the information indicating the broadcast program schedule is shared upon demand with the marked program holding unit 320 and the program availability calculating unit 350.

The marked program holding unit 320 stores an entry in a database (or similar storing means) for each broadcast program that is marked by a user (i.e. user's favorites). Preferably, the entry for each broadcast program comprises at least program name (series name, title, episode number, etc.), the broadcast channel name (for instance BBC, Zweites Deutsches Fernsehen (ZDF), and others), and the date of marking (year, day, time), for example.

Furthermore, the marked program holding unit 320 may optionally store the following additional pieces of information in the entries. The additional pieces of information include at least of episode number, date, program key words, actors, director, genre, popularity, ranking, and summary. In general, any piece of information available through the service information streams (SI streams) is stored in the marked program holding unit 320 for each program entry.

The marked program holding unit 320 corresponds to, for example, the designated content information holding unit 122 shown in FIG. 2. This means that the program marked by a user is an example of the content designated by a user and that the database which the marked program holding unit 320 holds is an example of the designated content information.

The program availability checking unit 340 serves for checking the availability on the network for those programs marked by the user. Preferably, online availability for free-of-charge is checked. The component implements the query format and logic specific to each broadcaster's application program interface (API).

Generally, each broadcaster makes content available online via different web portal and database architectures. Thus, different query formats, parameters and rules are required. The query formats are made available either through public availability of the APIs or through business-to-business agreements with broadcasters. Queries from the program availability checking unit 340 to web servers (catch-up servers) are triggered by the program availability calculating unit 350 descried below.

As indicated above, a query may include different pieces of information parameters. These information parameters are usually extracted from the (broadcast/multicast) SI streams and made available to the program availability checking unit 340 via the program availability calculating unit 350 from information stored in the marked program holding unit 320.

According to alternative embodiments, the user might or might not be allowed to complete the information through explicit input. The program availability checking unit 340 has direct access to service network, preferably via a broadband interface.

The program availability checking unit 340 corresponds to, for example, the content availability checking unit 110 shown in FIG. 2.

The program availability calculating unit 350 preferably functions for calculating a period of availability of a program over the network free of charge (free-of-charge period). Thus, the program availability calculating unit 350 is an example of the free-of-charge period calculating unit. However, in the same manner, also a period of general program availability over the network may be calculated in accordance with the embodiment of the present invention. Specifically, the program availability calculating unit 350 may calculate not only the free-of-charge period, but also a period during which the content is available at a price lower than a usual price or a period during which the content is available at the usual price.

According to a preferred embodiment, the program availability calculating unit 350 is configured for calculating two values. The first value is the "free-of-charge period rule" that indicates a length of time during which the content is available free-of-charge at online sources such as the broadcaster's web portal (catch-up server). The second value is the "free-of-charge online availability delay" that indicates how long it takes after actual broadcast transmission until the same content is available online free of charge.

The actual period of availability of a program free-of-charge (the free-of-charge period or FoC period) begins at a time equal to the free-of-charge availability delay after the actual broadcast time (broadcast start time or broadcast finish time according to different embodiments). The FoC period ends at an instance of time that is the result of adding the length of time defined in the free-of-charge period rule to the time instance of beginning. The respective time data indicating beginning and end of the FoC period of time are forwarded from the program availability calculating unit 350 to the notification unit 360.

The program availability calculating unit 350 corresponds to, for example, the period calculating unit 140 shown in FIG. 2. The free-of-charge period rule is an example of the period rule, and the free-of-charge online availability delay is an example of the availability delay. The period calculating unit 140 calculates the FoC period based on the current time, the free-of-charge period rule, and the free-of-charge online availability delay.

The program availability calculating unit 350 includes such components as shown in FIG. 6. Specifically, the program availability calculating unit 350 includes a free-of-charge period rule database 410, a free-of-charge delay database 420, an availability history record unit 430, a timer 440, and a calculating logic 450. FIG. 6 is a block diagram showing an example of a structure of the program availability calculating unit 350 according to the embodiment of the present invention.

The free-of-charge period rule database 410 is a database which has entries for each marked broadcast program containing the respective period rule. Generally, different situations with respect to the period rules may apply, depending on the broadcaster.

The period rules may be static or dynamic. Dynamic period rules may change over time, which need to be detected by keeping a history (described below). Period rules may also be obtained directly from the broadcaster via SI streams or other means. In this case, the program availability calculating unit 350 does not need to calculate the period rules by itself.

In principle, period rules may be different for each program and for each broadcaster, but in most cases there is a set of common rules depending on the channel and other attributes of the program. Such a common rule set is referred to as the "default FoC period rules" (FoC stands for free-of-charge) in this specification.

The default FoC period rules are pre-set time intervals for free-of-charge availability of content that are input to the FoC period rule database 410. Examples of such rules are: "content is free if not older than seven days", "last two episodes of series are free", or even "all episodes of a series are free".

For instance, the rule "content is free if not older than seven days" could apply by default to those programs of the genre "soap opera" (what is called a daytime soap). The period rule "all episodes of a series are free" could apply to the genre "news". The pre-set period rules are mainly used the first time a check of availability is made, and they serve to minimize the number of search queries, constrain the search query for free-of-charge content, optimize search time, and minimize received data.

The free-of-charge availability delay database 420 is a database which includes entries for each marked broadcast program containing its FoC availability delay.

The availability history record unit 430 includes a memory (not shown) and records, on the memory, a history of actual broadcast transmissions for marked programs (date, time) and information regarding when and for how long the same content has been made available online (that is, the FoC availability delay and FoC period rule described in detail above). The content to be recorded includes not only broadcast content received over airwaves, but also web content received via a network.

The results of the queries made by the program availability checking unit 340 are stored in the memory included in the availability history record unit 430. It is also possible that the availability history record unit 430 includes no memories and the results are stored in a storage device included in the digital television set which includes the electronic notification device according to the embodiment of the present invention.

Additionally, the availability history record unit 430 stores information on past broadcast schedules into the memory. The information is not only restricted to marked programs, but full schedules are also stored, for example. This enables the availability history record unit 430 to determine whether a first-time program marking (the program marked first) points to a single-occurrence or multiple-occurrence type of program by observing the frequency of the program over a time interval.

A program of the single-occurrence type is a program such as a movie and a live sports broadcast which is not or weakly related to other programs. A program of the multiple-occurrence type is a program such as a drama series, a movie series, and live sports broadcasts including preliminary and final rounds which is strongly related to other programs. For example, when a program with the same or similar program title is broadcast on the same channel starting from the same time every week, the availability history record unit 430 determines, based on information on past broadcast schedules, that the program is a program of the multiple-occurrence type.

The total amount of data stored in the memory included in the availability history record unit 430 (and thus the time period to be recorded) depends on the amount of storage available in the memory or the digital TV set. At least, the recordable time period should comprise the most demanding "default FoC period rule". The recordable time period can be updated via firmware or be changed by the user.

The timers 440 of FIG. 6 is responsible for triggering the program availability checking unit 340 to query for availability of online content. The timer 440 uses the FoC availability delay values as parameters to set up timers.

The timers 440 are in direct communication with the calculating logic 450 that performs the main functionality of the program availability calculating unit 350, described above. A more detailed description of an exemplary calculation scheme as performed by the calculating logic 450 is described below with reference to the flowchart of FIG. 8.

Additionally, the calculating logic 450 communicates with the program availability checking unit 340 for sending out queries for available online content and receiving marked program information. Additionally, the calculating logic 450 receives the default FoC period rules described above. An outside connection is provided from the EPG metadata receiving unit 310 to the availability history record 430 via the calculating logic 450. Thereby, the broadcast schedule is provided.

It is further noted that there may be a situation (depending on particular broadcasters), wherein the information received from a broadcaster already contains the "free-of-charge period rule" and the "free-of-charge online availability delay". In this case, the calculation by the calculating logic 450 may be obsolete, with respective values each to be transferred to the program availability calculating unit 350.

Referring back to FIG. 5, the user viewing checking unit 330 and the notification unit 360 are described in the following.

The user viewing checking unit 330 serves for checking whether or not the user has watched the marked program. The notification information to be presented on the notification board is updated depending on the result of the check. The notification board is an area which is displayed on a display unit to present the notification information to a user, and is, for example, a pop-up window which is displayed in a visible area of the EPG screen.

The user viewing checking unit 330 corresponds to, for example, the viewing determining unit 123 shown in FIG. 2.

The notification unit 360 is configured for notifying availability and preferably the free-of-charge period of a marked program based on information provided by the user viewing checking unit 330, the program availability checking unit 340, and the program availability calculating unit 350 communicating therewith. According to a preferred embodiment, the notification unit 360 notifies of the following three types of information. The three types of information are information indicating (1) whether the program has been watched or not, (2) whether the program is available online free-of-charge, or not, and (3) how long it will be available for free and how much time remains free-of-charge.

The notification unit 360 corresponds to, for example, the notification unit 130 shown in FIG. 2. Specifically, the information indicating whether the program has been watched or not and whether the program is available online free-of-charge or not is an example of the specific content information, and the information indicating how long it will be available for free is an example of the period information.

Here, an example of the information which the notification unit 360 (or the notification unit 130) causes the display unit to display is described.

FIG. 7A illustrates a screen example of an electronic program guide in a status when a program is marked.

As shown in FIG. 7A, the electronic program guide (EPG) is displayed on a screen of the display unit. The EPG is a table which shows a broadcast program provided from each broadcast station (on each channel) each hour. For example, FIG. 7A shows that a program on which "Singer A" appears starts on channel 1 (Ch1) at 21:00 and "Drama B1" starts on channel 2 (Ch2) at 21:00.

Furthermore programs surrounded by bold lines; specifically, "Drama B1", "Drama C1", and "Drama L" on channel 2, "Drama F" on channel 4, and "Live soccer: H vs I" on channel 6, are programs marked by a user (that is, an example of the designated content). Moreover, programs hatched by diagonal lines inclined to the left; specifically, "Drama L" and "Movie M" on channel 2, "Drama B2" on channel 3, and "Movie N" on channel 4, are charged programs (pre-programs).

FIG. 7B illustrates a screen example of an electronic program guide in a status when notification of availability of online content is performed. The screen example of the electronic program guide illustrated in FIG. 7B shows an electronic program guide given, for example, five days after the date of accepting program marking as shown in FIG. 7A.

Typically, a notification board 500 (or a notification pop-up window) is displayed in a visible area of the EPG screen, as illustrated in FIG. 7B. The notification unit 360 also serves for displaying, in a user-friendly manner, the responses to the availability checks by the program availability checking unit 340.

As can be seen from the screen example illustrated in FIG. 7B, according to a preferred embodiment the status of the availability of marked programs on a network service (catch-up service) is displayed by pressing a particular on-screen button ("Content information"). The notification board 500 according to the embodiment presents a list of missed programs available from catch-up service together with an indication as to how long the programs marked by a user will remain available.

For example, the notification board 500 illustrated in FIG. 7B shows that "Drama B1" and "Drama L" on channel 2 will remain available for three more days. Furthermore, the notification board 500 shows that "Drama C1" on channel 2 will remain available for two more days and "Drama F" on channel 4 will remain available for one more day.

It is to be noted that "Live soccer: H vs I" on channel 6 has been marked as shown in FIG. 7A, but has been viewed by a user or is unavailable on online and therefore is not displayed on the notification board 500 of FIG. 7B. In the case where the marked program which a user has not viewed is not available on online, the notification board 500 may indicate that the program is not available on online.

Although the periods are indicated in units of days in the example shown in FIG. 7B, they may be indicated in units of hours and minutes (what is more, seconds).

With reference to the flow chart of FIG. 8, the following describes an operation of the electronic notification device 100 according to the embodiment of the present invention; especially, a process of calculating the free-of-charge period. FIG. 8 is a flowchart showing an exemplary operation in the process of calculating the free-of-charge period among the operations of the electronic notification device 100 according to the embodiment of the present invention.

For the purposes of the following detailed description, it is assumed that two types of programs can be broadcasted: single-occurrence and multiple-occurrence programs. Examples of single-occurrence programs are Hollywood blockbusters shown on broadcast, wherein each of a plurality of transmissions is considered to be independent, although they might be sent a number of times during a given period of time. Examples of multiple-occurrence programs are fixed-scheduled episodes of multi-part productions, series, "sitcoms", soap operas and similar, as well as fixed-schedule afternoon news and talk shows.

First, in step S301, a user marks a program of interest in the electronic program guide (EPG). This means that he/she wants to be reminded when transmission is imminent. Such a functionality is typically available on contemporary digital TV sets.

Next, the EPG metadata receiving unit 310 checks in step S302 if there is any kind of information in the SI streams (or other means for providing broadcast schedule data) that determines whether the program is made free-of-charge online or not. This means that the EPG metadata receiving unit 310 determines whether or not the information indicating the period rule or the availability delay can be obtained from a broadcast or the like.

When no such information indicating the period rule or the availability delay is found (step S302: No), processing flow proceeds to step S303, wherein a routine of the program availability calculating unit 350 for calculating such information indicating the period rule or the availability delay is started. When the information indicating the period rule or the availability delay is found (step S302: Yes), the EPG metadata receiving unit 310 obtains the information indicating the period rule or the availability delay and stores the obtained information into the database in step S308.

As shown in FIG. 8, in each case, the received or calculated information is stored in the database in step S308. Specifically, the information indicating the received or calculated period rule is stored in the free-of-charge rule database 410, and the information indicating the received or calculated availability delay is stored in the free-of-charge delay database 420.

Based on the stored information, the FoC period of time is calculated in step S310, for instance in a manner as described above in connection with FIGS. 5 and 6. The calculated FoC period is transmitted to the notification unit 360 for update.

In step S303, the program availability calculating unit 350 checks whether the marked program is of type single-occurrence or of type multiple-occurrence. This is done, for example, by parsing, by the calculating logic 450, the stored information on past broadcast schedules that the availability history record 430 stores in the memory or the like.

For instance, if titles of programs are very similar and have the same schedule (day of week, time of day) over a number of occurrences (for instance, over a month), then it can be determined that the program of interest is of type multiple-occurrence. Conversely, if the program of interest is not found in the broadcast schedule data available, then it can be determined that it is of type single-occurrence.

If the marked program is of type single-occurrence (step S303: Yes), the following processing applies as an example.

If FoC availability delay for the broadcast channel on which the marked program is broadcast is available (because already calculated using N previous markings), then the program availability calculating unit 350 shall set a timer to detect online availability. N is a predetermined integer parameter that will be explained below.

Otherwise, if there is no information of on-line availability delay for this broadcast, then the current marking shall be used to calculate the FoC availability delay (step S304) (until N markings are used). Further, if no period rule is available yet, then the current markings shall be used to calculate a period rule (step S305).

The respective processing steps, which have been briefly summarized above, will be described in more detail later.

If the marked program is of type multiple-occurrence (step S303: No), the following processing applies as an example.

If the episode of the program is marked for the first time, then there is no period rule available for the pair of marked program and broadcast channel. Hence, the program availability calculating unit 350 calculates the FoC period rule of the program (step S306). Furthermore, the program availability calculating unit 350 calculates the FoC availability delay in step S307.

The processing of the respective method steps will now be described in more detail below.

At the outset, an exemplary method for calculating the FoC period rule will be described.

Firstly, it is noted that, as already indicated above, period rules might already be provided by the broadcaster for each program of multiple-occurrence type.

Additionally, default period rules are pre-set by the manufacturer in the TV set to cover the period of time for which the availability history record unit 430 shall store scheduled data. The manufacturer might update the default period rules via firmware updates, and if allowed by the manufacturer, the user might modify them.

For those cases where none of the above applies, in the following, mechanisms for calculating the FoC period rule are described.

If the program is of type multiple-occurrence and no "period rule" is given, then the program availability calculating unit 350 shall cause the program availability checking unit 340 to start a query to the specific broadcaster for available content with that program name. Since typically the titles of programs of multiple-occurrence type have a high-degree of similarity, the calculating logic 450 in the program availability calculating unit 350 shall detect which is the common part in the title and its fixed schedule, and set the detected common part as parameters for the query. In typical broadcast schedules a feed line or a semicolon or hyphen separates the series title and the episode title.

As result, the program availability checking unit 340 receives a set of past episodes of that program of multiple-occurrence type already available free-of-charge online. Now, the program availability calculating unit 350 calculates the free-of-charge period rule by comparing the broadcast transmission date of the oldest free-of-charge episode and the current date. By so doing, the program availability calculating unit 350 creates an entry in the free-of-charge period rule database 410, for use in future queries for the same pair of program and broadcast channel.

Additionally, the procedure described allows the program availability checking unit 340 to ascertain the "next episode's broadcast time" that is when the next episode will be "aired" on broadcast TV.

The FoC period rules obtained for programs of multiple-occurrence type are stored in the FoC period rule database 410 and apply, in the simplest implementation, to programs of multiple-occurrence type with the same title and from the specific broadcaster. More complex schemes where different period rules are stored per program, genre, daytime, or any additional parameter are also possible, but are not described in detail herein.

Subsequently, in the following, the procedure for calculating an FoC period rule in the case of programs of single-occurrence type is described.

In the case of programs of single-occurrence type, the program availability calculating unit 350 arranges for a regular query (i.e.: set a timer) to the broadcaster's servers to check if the marked program is still available in the catch-up servers. The query shall be repeated until the query is no longer successful, thereby determining the FoC period rule. The notification unit 360 updates notified details according to the determined FoC period rule.

The queries are sent at time instants equal to t = T_bb_avail + i*T_cu, where T_bb_avail is the time instant where the specific program of single-occurrence type was made available online, the index i takes the values i = 1, 2, ...n, and T_cu is the catch-up server query frequency for programs of single-occurrence type expressed in units of time. T_bb_avail values are stored in the memory or the like by the availability history record unit 430.

The FoC period rules obtained for programs of single-occurrence type are stored in the FoC period rule database 410 and apply, in the simplest implementation, to all programs from the same broadcaster. More complex schemes where different period rules are stored per program, genre, daytime, or any additional parameter are also possible, but are not described in detail herein.

In the following, an example is given:

If the program has been made available online on T_bb_avail = {Thursday, April 2, 2009, 19:50}, then a query shall be sent to the catch-up server on the following days also at 19:50. If the latest successful query took place on T_bb_avail + i*T_cu = {Wednesday, April 8, 2009, 19:50}, i.e. i = 6 and T_cu = 1 day, then the FoC period rule is seven days. This means that the FoC period rule indicates that the content is available free-of-charge for seven days. This is, in fact, a typical value for current catch-up offerings.

This period rule can now be stored for this broadcast channel and assumed to be applicable to all single occurrence markings (marked programs of single-occurrence type) for this channel.

Subsequently, in the following, exemplary methods for calculating the FoC availability delay will be described in detail.

The description starts with the case of programs of single-occurrence type in step S304. The FoC availability delay is calculated for programs of single-occurrence type for a specific broadcast channel.

1. Starting from the point in time after the broadcast transmission of the marked program has been finalized, or immediately if the actual broadcast transmission has already taken place, the program availability calculating unit 350 shall arrange for a query for that program to be sent by the program availability checking unit 340 regularly every time interval Tq to the broadcaster's server, for instance, every Tq = 5 minutes, and stop this process when the query is successful. The time instant resulting therefrom, T_bb_avail, is specific for each program and is stored in the memory or the like by the availability history record unit 430. To avoid any deadlock of the processing, the querying shall take place up to a maximum period of time of D*T_program, where T_program is the length of the program of interest and D is a tuning parameter. The typical value for D is between 1 and 3.

If after a maximum time, D*T_program, after the actual broadcast transmission date of the program (T_end-actual-bcast-tx), there is still no success, the querying is stopped. It shall then be assumed that this program of single-occurrence type is not available free-of-charge from the broadcaster's web servers. A corresponding entry shall be made into the databases. Only the user may now modify the maximum query time and restart additional queries manually from the EPG. This might be the case when broadcasters change their policy for online content availability. In this case the user can counteract and reactively make requests.

2. After the first successful query, and in order to establish a check interval common for all programs of single-occurrence type of this specific broadcast channel, the procedure is repeated for any N - 1 subsequent marked programs of single-occurrence type of that specific broadcast channel, for instance, a total of N = 5 queries. Alternatively, a more exact variation of this method can be to store the different values obtained depending on programs, genre or other availability attributes.

3. Using the N results stored, the check interval determined by the minimum and maximum of FoC availability delay values for programs of single-occurrence type of that specific broadcaster can now be calculated as the interval (FoCAvailDelay_min_so, FoCAvailDelay_max_so) and the interval can be stored and associated to subsequent markings of programs of single-occurrence type of that broadcaster (step S308).

In all cases, FoC availability delay values resulting from these queries are stored in the memory or the like by the availability history record unit 430.

Subsequently, the case where the programs are of multiple-occurrence type will be described. A slightly modified version of the method described above is used if the programs are of multiple-occurrence type. The modified version will be described below.

1. Starting from the point in time after the broadcast transmission of the marked episode program is finalized, or immediately if the actual broadcast transmission has already taken place, the program availability calculating unit 350 shall arrange for a query for that episode to be sent by the program availability checking unit 340 regularly every Tq to the broadcaster's server, for instance, every Tq = 5 minutes, and stop this process when the query is successful. The time instant resulting therefrom, T_bb_avail, is specific for each program and is stored in the memory or the like by the availability history record unit 430. To avoid a deadlock of the processing, the querying shall take place up to a maximum period of time of D*T_program, where T_program is the length of the program of interest and D is a tuning parameter. The typical value for D is between 1 and 3.

If after this maximum time D*T_ program and after the actual broadcast transmission date of the program (T_end-actual-bcast-tx) there is still no success, the querying is stopped. It shall then be assumed that this program of multiple-occurrence type or this particular episode is not available free-of-charge from the broadcaster's web servers. A corresponding entry shall be made into the databases. Only the user may now restart and modify maximum query time (D*T_ program) for additional queries manually from the EPG. This might be the case when broadcasters change their policy for online content availability. In this case the user can counteract and reactively request.

2. After the first successful query, the procedure described under item 1. above is repeated for a number N - 1 of marked text episodes of that specific program of multiple-occurrence type and broadcast channel combination, for instance, a total of N = 5 queries. The next episode's broadcast time is ascertained when the period rule is calculated, as described above. The program availability period calculating unit 350 shall coordinate this procedure and no further marking is required. The interim FoC availability delay values resulting from these queries are stored in the memory or the like by the availability history record unit 430.

3. Using the N results stored, the check interval determined by the minimum and maximum of FoC availability delay values for this specific program of multiple-occurrence type of a specific broadcaster can now be calculated as the interval FoCAvailDelay_min_mo, FoCAvailDelay_max_mo) and can be stored and associated to the specific program of multiple-occurrence type of that broadcaster (step S308).

4. After the FoC availability delay is available, the program availability period calculating unit 350 shall set a timer (step S309) to trigger availability checks as will be described in more detail below for each following episode, as long as there are next episodes of the program of multiple-occurrence type.

In all cases, FoC availability delay values resulting from these queries are stored in the memory or the like by the availability history record unit 430.

In the following, the subsequent steps of scheduling online availability checks triggered by the timers in step S309 will be briefly described.

In the case of programs of single-occurrence type, the following two steps are performed:

1. Queries for any marked program on this broadcast channel are sent after the broadcast transmission regularly (every firing off timers (step S311)) every Tq in the time interval defined as T_check = (T_end-actual-bcast-tx + FoCAvailDelay_min_so, T_end-actual-bcast-tx + FoCAvailDelay_max_so), where T_end-actual-bcast-tx is the end of the actual broadcast transmission date of the program.

2. The results of the online availability checks (step S312) are used to update the notification unit 360 accordingly (step S313). The notification unit 360 updates the notification board 500 shown in FIG. 7B.

In the case of programs of multiple-occurrence type, the following three steps are performed:

1. Queries for the pair of episodes of program and broadcast channel are sent after each scheduled episode regularly (every firing off timers (step S311)) every Tq in the time interval defined as T_check = (T_end-actual-bcast-tx + FoCAvailDelay_min_mo, T_end-actual-bcast-tx + FoCAvailDelay_max_mo) where T_end-actual-bcast-tx is the end of the actual broadcast transmission date of the episode.

2. The results of the online availability checks (step S312) are used to update the notification unit 360 accordingly (step S313). The notification unit 360 updates the notification board 500 shown in FIG. 7B.

3. Finally, the program availability calculating unit 350 sets timers to trigger the first step again for the next scheduled episode.

It is once more emphasized that the detailed description as given above has been given for illustrative purposes only, and the exemplary embodiments, parameters and values introduced therein are not considered to limit the present invention.

In particular, this concerns the values for parameters such as D, Tq, T_cu and N. In general, these parameters can be preset, or the user can be given the option to set/modify these values, in compliance with a particular implementation of the present invention.

Furthermore, it is noted that the calculation schemes as described above have been described for checking the availability of free-of-charge. However, it is straightforward for a person skilled in the art to apply a respective calculation of online availability of program contents at all. A further variation covers calculation for notification of special price promotions for content, i.e. prices that are lower than usual, wherever a particular business model of the content and/or service provider allows such a situation. The main idea remains the same: the user is notified of a start and end period where media acquisition is available at all, or is especially convenient.

The mechanism described in the previous sections allows that notifications on available content are provided as soon as possible. Thus, notifications can be automatically provided as pop-ups while watching TV.

Alternatively, in order to restrict bandwidth consumption, the digital TV set may refrain from sending queries when the user is watching TV. In this way, only when the user is actively parsing the EPG, availability checks are sent and notification is displayed in a reserve notification area as shown in FIG. 7B.

In the above description, it has been assumed for simplicity that programs of single-occurrence type share a common FoC availability delay value. However, the value may also vary. A variation of the described method would be that the program availability calculating unit 350 performs a calculation using a number of availability checks and more information such as the duration, if there is a possibility of inferring an FoC availability delay value depending on the length of the program itself. For example: all programs are made available online 1.5 * program_length after the end of the broadcast. It is noted that the particular value of 1.5 is given by way of example only.

Further, for simplicity it has been assumed that all single-occurrence programs of a broadcaster have the same FoC period rule value. However, the value may be different for each program, depending, for instance, on its genre or a value perceived by the broadcaster. Although such mechanisms have not been described in detail herein, a person skilled in the art would be able to extend the method described in a straightforward manner: by storing more complex period rules together with attributes such as genre, etc. in the databases.

In summary, the present invention allows notifications about online availability for TV programs that have been broadcast from broadcasters' web services (catch-up services). The notification functionality is integrated into an electronic program guide functionality in a manner that does not require any complicated multi-step user interaction. Users can download or watch by streaming a broadcast program that is available online via a web service upon the notification. The present invention is particularly applicable for making notifications about programs availability free-of-charge.

While the electronic notification device and the electronic notification method according to an implementation of the present invention have been described above based on the embodiments, the present invention is not limited to these embodiments. The scope of the present invention includes other embodiments that are obtained by making various modifications that those skilled in the art could think of, to the present embodiments, or by combining constituents in different embodiments.

For example, in the above embodiments, specified as the specific content is the content which is designated by a user and has not viewed yet by a user, but the specific content is not limited to such content. For example, the electronic notification device may automatically specify the specific content based on a user's view history or user's tastes or preferences.

FIG. 9 is a block diagram showing an example of a structure of an electronic notification device 600 according to a variation of the present invention. In FIG. 9, the same constituents as those in the electronic notification device 100 shown in FIG. 2 are denoted by the same reference numerals and descriptions thereof will be omitted below.

The electronic notification device 600 shown in FIG. 9 is different from the electronic notification device 100 shown in FIG. 2 in that a specifying unit 620 is provided instead of the specifying unit 120. As shown in FIG. 9, the specifying unit 620 includes the designation accepting unit 121, the designation content information holding unit 122, a viewing determining unit 623, a content specifying unit 624, a user information accepting unit 625, and a view history holding unit 626.

The viewing determining unit 623 determines, like the viewing determining unit 123, whether or not the designated content indicated in the designated content information held in the designated content information holding unit 122 has already been viewed by a user. Furthermore, the viewing determining unit 623 determines whether or not, among the specific content specified by the content specifying unit 624, content on which the view determination has not been performed has been viewed. For example, the viewing determining unit 623 determines whether or not the specific content specified by the content specifying unit 624 based on the user information or history information has already been viewed.

The content specifying unit 624 specifies specific content based on the user information accepted by the user information accepting unit 625. Specifically, the content specifying unit 624 specifies, as the specific content, content which matches a genre or key words indicated in the user information, among plural pieces of content.

Furthermore, the content specifying unit 624 specifies the specific content based on the history information held in the view history holding unit 626. For example, the content specifying unit 624 specifies a genre, keywords, or the like of programs which a user wishes to view, based on the history information, and specifies, as the specific content, content which matches the specified genre or key words. Alternatively, in the case where the history information shows that a user watches programs at the same time of day on the same channel every week, the content specifying unit 624 may specify, as the specific content, the programs at that time of day on that channel.

Furthermore, the content specifying unit 624 determines, as the specific content, content determined by the viewing determining unit 623 as not having been viewed. Specifically, the content specifying unit 624 specifies, as the specific content, content determined by the viewing determining unit 623 as not having been viewed, among the specific content specified based on the user information or history information.

The user information accepting unit 625 is an interface through which the user information indicating user's tastes or preferences is accepted. For example, the user information accepting unit 625 receives a user's favorite genre, key words, or the like as the user's tastes or preferences.

The view history holding unit 626 is a memory in which the history information indicating a view history of content by a user is held. The view history holding unit 626 holds broadcast content or web content viewed by a user.

With the above structure, the electronic notification device 600 according to a variation of the embodiments of the present invention specifies, as the specific content, content which has not been viewed among the content specified based on the user's designation, user information or view history, and notifies a user of the specific content information indicating the specific content among the content available via the network.

This allows presentation, to a user, of the content which the user wishes to view among a large number of pieces of content without the need for a large number of user operations. Furthermore, since the specific content is specified based on not only the user's designation but also the user information or view history automatically, the required number of user operations can be further reduced.

The content specifying unit 624 may specify the specific content based on the user information only, or may also specify the specific content based on the view history only. Alternatively, the content specifying unit 624 may specify, as the specific content, a union or intersection of at least two of the specific content specified based on the user information only, the content specified based on the view history only, the content designated by a user, and the content determined as not having been viewed.

Furthermore, the notification unit 130 may perform the notification not only in response to a request from a user, but also upon an increase in the user's interest level in the content. For example, the notification unit 130 may perform the notification upon upgrading content details or upon a change in a fee for viewing content to free or a lower price.

Furthermore, the specifying unit 120 may specify, as the specific content, content with details updated. For example, in the case where content is a movie or drama, the specifying unit 120 specifies, as the specific content, content which additionally contains special material such as interviews with actors and actresses and a making-of featurette. Alternatively, the specifying unit 120 may specify, as the specific content, content with higher image or sound quality than the previous content.

Furthermore, regardless of whether or not there is user's designation or whether or not the content has been viewed, the specifying content 120 may specify, as the specific content, content for which viewing fee has been changed to free or a lower price than a predetermined price.

Furthermore, the electronic notification device according to the embodiments of the present invention may not only be built in a digital television or the like, but also be mounted on a server device so that the notification is displayed on a browser on a terminal through a general web interface or the like.

It is to be noted, as mentioned above, that the present invention can be implemented not only as an electronic notification device and an electronic notification method, but also as a program which causes a computer to execute the electronic notification method according to the present embodiment. Furthermore, the present invention may be implemented as a computer-readable recording medium, such as a CD-ROM, on which the program is recorded. Moreover, the present invention may be implemented as information, data, or signals which represent the program. These program, information, data, and signals may be distributed via a communication network such as the Internet.

In the present invention, part or all of the constituents included in the electronic notification device may be provided in one system LSI (large scale integration). The system LSI is a super multifunctional LSI manufactured by integrating plural constituents into one chip and is specifically a computer system which includes a microprocessor, a ROM, and a RAM.

### [Industrial Applicability]

The electronic notification device and the electronic notification method according to an implementation of the present invention produce an effect that allows presentation, to a user, of content which the user wishes to view among a large number of pieces of content without the need for a large number of user operations, and are applicable to home appliances, such as television receivers, digital television sets, Blu-ray players/recorders, DVD players/recorders, personal video recorders (PVR), set-top boxes, or game console products.

### [Reference Signs List]

- 100, 600: Electronic notification device
- 110: Content availability checking unit
- 120, 620: Specifying unit
- 121: Designation accepting unit
- 122: Designated content information holding unit
- 123, 623: Viewing determining unit
- 124, 624: Content specifying unit
- 130, 360: Notification unit
- 140: Period calculating unit
- 200: Digital television set
- 201, 202: Interface
- 210: User
- 220: Remote control unit
- 230: Broadcast source
- 240: Network source
- 270: Display unit
- 310: EPG metadata receiving unit
- 320: Marked program holding unit
- 330: User viewing checking unit
- 340: Program availability checking unit
- 350: Program availability calculating unit
- 410: Free-of-charge period rule database
- 420: Free-of-charge availability delay database
- 430: Availability history record unit
- 440: Timer
- 450: Calculating logic
- 500: Notification board
- 625: User information accepting unit
- 626: View history holding unit

## Claims

1. An electronic notification device that notifies a user whether content is available via a network, said electronic notification device comprising:
a content availability checking unit configured to obtain content availability information indicating one or more pieces of content available via the network;
a specifying unit configured to specify one or more pieces of specific content in which a user's interest level is determined as having increased, by determining whether or not the user's interest level in the content has increased; and
a notification unit configured to notify the user of specific content information indicating the one or more pieces of specific content specified by said specifying unit among the one or more pieces of content indicated in the content availability information.

2. The electronic notification device according to Claim 1,
wherein said specifying unit further includes:
a designation accepting unit configured to accept an instruction by which the user designates the content; and
a content specifying unit configured to specify, as the specific content, the content designated based on the instruction accepted by said designation accepting unit.

3. The electronic notification device according to Claim 2,
wherein said designation accepting unit is configured to accept the instruction via an electronic program guide (EPG) showing the content to be broadcast according to a predetermined schedule.

4. The electronic notification device according to Claim 2 or 3,
wherein said specifying unit further includes
a viewing determining unit configured to determine whether or not the content designated based on the instruction accepted by said designation accepting unit has already been viewed by the user, and
said content specifying unit is configured to specify, as the specific content, content determined by said viewing determining unit as not having been viewed, among the content designated based on the instruction accepted by said designation accepting unit.

5. The electronic notification device according to one of Claims 1 to 4,
wherein said content availability checking unit is configured to obtain the content availability information indicating the one or more pieces of specific content available via the network and specified by said specifying unit.

6. The electronic notification device according to Claim 5, further comprising
a history information storage unit configured to hold history information indicating a view history of the content by the user,
wherein said specifying unit is configured to specify the specific content based on the history information held in said history information storage unit.

7. The electronic notification device according to Claim 5, further comprising
a user information accepting unit configured to accept user information indicating a taste or a preference of the user,
wherein said specifying unit is configured to specify the specific content based on the user information accepted by said user information accepting unit.

8. The electronic notification device according to one of Claims 1 to 7, further comprising
a period calculating unit configured to calculate a period during which the user's interest level in the specific content is high, wherein said notification unit is configured to notify the user of period information indicating the period calculated by said period calculating unit, together with the specific content information.

9. The electronic notification device according to Claim 8,
wherein for the specific content, a viewing fee to be charged to the user who views the specific content is predetermined, and
said period calculating unit is configured to calculate, as the period, a low-price period during which the viewing fee is free or lower than a predetermined price.

10. The electronic notification device according to Claim 9,
wherein said period calculating unit is configured to calculate the low-price period based on current time information indicating a current time and a period rule indicating a relationship between the viewing fee and the period.

11. The electronic notification device according to Claim 10,
wherein said period calculating unit is configured to calculate the period rule and calculate the low-price period based on the calculated period rule and the current time information.

12. The electronic notification device according to Claim 9,
wherein said period calculating unit is configured to calculate the low-price period based on current time information indicating a current time and an availability delay indicating a duration until the specific content is available on the network.

13. The electronic notification device according to Claim 12,
wherein said period calculating unit is configured to calculate the availability delay and calculate the low-price period based on the calculated availability delay and the current time information.

14. The electronic notification device according to Claim 1,
wherein for the content, a viewing fee to be charged to the user who views the content is predetermined, and
said specifying unit is configured to specify, as the specific content, content of which viewing fee has been changed to free or a price lower than a predetermined price.

15. The electronic notification device according to Claim 1,
wherein said specifying unit is configured to specify, as the specific content, content with details updated.

16. The electronic notification device according to Claim 1,
wherein said specifying unit includes:
a viewing determining unit configured to determine whether or not the one or more pieces of content indicated in the content availability information have already been viewed by the user; and
a content specifying unit configured to specify, as the specific content, content determined by said viewing determining unit as not having been viewed.

17. The electronic notification device according to one of Claims 1 to 16, further comprising
a request accepting unit configured to accept, from the user, a notification request for requesting notification of the specific content information,
wherein said notification unit is configured to notify the user of the specific content information when said request accepting unit accepts the notification request.

18. An electronic notification method of notifying a user whether content is available via a network, said electronic notification method comprising:
obtaining content availability information indicating one or more pieces of content available via the network;
specifying one or more pieces of specific content in which a user's interest level is determined as having increased, by determining whether or not the user's interest level in the content has increased; and
notifying the user of specific content information indicating the one or more pieces of content specified in said determining among the one or more pieces of content indicated in the content availability information.

19. The electronic notification method according to Claim 18,
wherein in said notifying, the user is notified of the specific content information and information related to the user's interest level in the specific content indicated in the specific content information when the user's interest level has increased or when a request for notification from the user is accepted.

20. A program causing a computer to execute said electronic notification method according to Claim 18 or 19.

21. An integrated circuit that notifies a user whether content is available via a network, said integrated circuit comprising:
a content availability checking unit configured to obtain content availability information indicating one or more pieces of content available via the network;
a specifying unit configured to specify one or more pieces of specific content in which a user's interest level is determined as having increased, by determining whether or not the user's interest level in the content has increased; and
a notification unit configured to notify the user of specific content information indicating the one or more pieces of content specified by said specifying unit among the one or more pieces of content indicated in the content availability information.
